# EUROPEAN PATENT APPLICATION

(11) **EP 4 768 762 A1**
(43) Date of publication of application: **01.07.2026**
(21) Application number: 24871082.4
(22) Date of filing: 29.09.2024
(51) Int. Cl.: F16K 15/06, F16K 15/02

(54) **CHECK VALVE**

(30) Priority: 28.09.2023 CN 202322675333 U
(71) Applicant: Zhejiang Dunan Artificial Environment Co., Ltd., Shaoxing Zhejiang 311835 (CN)
(72) Inventor: ZHU, Peijun, Shaoxing, Zhejiang 311835 (CN); WANG, Fugang, Shaoxing, Zhejiang 311835 (CN); JIN, Ju, Shaoxing, Zhejiang 311835 (CN)
(74) Representative: Zacco GmbH
(86) International application number: PCT/CN2024/122478
(87) International publication number: WO 2025/067547

(57) **Abstract**

The present disclosure provides a check valve, which comprises a mounting body having a valve cavity and a valve port; a piston movably disposed in the valve cavity, an outer side wall of the piston being in guiding fit with an inner wall of the valve cavity, the piston being capable of closing or opening the valve port; an elastic member disposed between the piston and the mounting body and used for providing an elastic force for the piston to move toward the valve port. A first guide hole is provided at an end of the piston away from the valve port, one end of the elastic member is located in the first guide hole, and the other end of the elastic member abuts against the mounting body. The technical solution provided by the present disclosure can solve the problem in the prior art that the elastic member is extremely prone to deflection during the movement of the piston.

## Description

The present disclosure claims priority to Patent Application No. 202322675333.1, filed with the China National Intellectual Property Administration on September 28, 2023, and titled "Check Valve".

### Technical Field

The present disclosure relates to the technical field of check valves, and in particular to to a check valve.

### Background

In a prior art, a check valve includes an elastic member and a piston. When the piston moves toward a valve port, a length of the elastic member increases, and when the piston moves away from the valve port, the length of the elastic member decreases. During use of the check valve, non-linear movement of the piston and non-limitation of the elastic member may easily cause the elastic member to become deflected, thereby affecting normal movement of the piston within a valve seat.

### Summary

The present disclosure provides a check valve, which is intended to solve a problem in a related art that an elastic member is prone to deflection during a movement of a piston.

The present disclosure provides a check valve, including: a mounting body having a valve cavity and a valve port; a piston movably disposed in the valve cavity, an outer side wall of the piston being in guiding fit with an inner wall of the valve cavity, the piston being capable of closing or opening the valve port; an elastic member disposed between the piston and the mounting body, and the elastic member being used for providing an elastic force for the piston to move toward the valve port, where a first guide hole is provided at an end of the piston away from the valve port, an end of the elastic member is located in the first guide hole, and an other end of the elastic member abuts against the mounting body.

With the technical solution of the present disclosure, the piston moves along the inner wall of the valve cavity, and the elastic member can drive the piston to move toward the valve port. Since the outer side wall of the piston is in guiding fit with the inner wall of the valve cavity, deflection of the piston during movement can be avoided, ensuring that the piston in the check valve can move linearly during movement, so that the elastic member can be compressed and restored linearly, avoiding deflection of the elastic member, and further ensuring that the piston can maintain linear motion when the elastic member drives the piston to move; in addition, an end of the elastic member is located in the first guide hole, so that the first guide hole can limit a position of the elastic member, further reducing a possibility of deflection of the elastic member.

Further, an outer wall of the elastic member is attached to an inner wall of the first guide hole. With such an arrangement, a part of the elastic member is located in the first guide hole, and the first guide hole can limit the position of the elastic member, further avoiding deflection of the elastic member, thereby ensuring a normal movement of the piston.

Further, the valve cavity includes an accommodating cavity, an end of the accommodating cavity away from the valve port being a second guide hole; the piston is in guiding fit with the second guide hole; an end of the second guide hole is open, an other end is a closed end, and an end portion of the elastic member abuts against the closed end. With such an arrangement, since the piston is located in the second guide hole and the elastic member is located in the first guide hole, a volume of the check valve can be reduced, facilitating an use of the check valve.

Further, the mounting body includes a valve seat, the valve seat includes a blocking member and a valve body that are connected to each other, the accommodating cavity is formed between the blocking member and the valve body, and the valve port is provided at an end of the valve body away from the blocking member; the blocking member is provided with a second guide hole, an end of the piston away from the valve port is movably disposed in the second guide hole, and the piston is in guiding fit with the second guide hole; and/or, at least a part of the piston is located in the valve body, and the piston is in guiding fit with an inner wall of the valve body; the elastic member is located between the piston and the blocking member. With such an arrangement, the valve seat has a simple structure, facilitating an assembly of the valve seat and the piston, and at the same time, facilitating a processing of the mounting base and a placement of the elastic member, and ensuring a normal operation of the elastic member.

Further, the blocking member is provided with the second guide hole, and the piston is in guiding fit with the second guide hole; an end of the second guide hole is open, an other end is a closed end, and an end portion of the elastic member abuts against the closed end. With such an arrangement, the elastic member can be ensured to drive the piston to move toward the valve port, and a stability of movement of the piston can be ensured at the same time.

Further, the blocking member is provided with a groove, an end of the valve body away from the valve port is sleeved outside the blocking member, and a part of the valve body is located in the groove, and the valve body is fixedly connected to a circumferential wall of the groove. With such an arrangement, a connection stability between the blocking member and the valve body 112 can be ensured, avoiding disconnection between the blocking member 111 and the valve body.

Further, the groove includes a first annular wall, a second annular wall, and a bottom surface. An end of the valve body away from the valve port includes a first valve body wall and a second valve body wall, the second valve body wall is provided at an end of the first valve body wall away from the valve port, and a width of the second valve body wall in a radial direction of the valve is greater than a width of the first valve body wall in the radial direction of the valve; the second valve body wall is attached to the bottom surface, the first valve body wall is attached to the first annular wall, and the second annular wall is riveted and fixed to the second valve body wall. With such an arrangement, the groove can be closely attached to the first valve body wall and the second valve body wall, reducing a volume occupied during a connection of the blocking member and the valve body, and facilitating an assembly of the blocking member and the valve body.

Further, the mounting body further includes a mounting base, and at least a part of the blocking member and at least a part of the valve body are both located in the mounting base. With such an arrangement, a processing of the mounting body is facilitated.

Further, the mounting body includes a valve seat. The valve port is located on the valve seat, the valve seat is provided with an accommodating cavity, an outer side wall of the piston is in guiding fit with an inner wall of the accommodating cavity, and the elastic member is disposed between the piston and the valve seat. With such an arrangement, the mounting body has a simple structure, facilitating an assembly of the valve seat and the mounting base, and at the same time, facilitating the processing of the mounting base.

Further, an end of the accommodating cavity away from the valve port is a second guide hole; the piston is in guiding fit with the second guide hole; an end of the second guide hole is open, an other end is a closed end, and an end portion of the elastic member abuts against the closed end. With such an arrangement, the elastic member can be ensured to drive the piston to move toward the valve port, and the stability of movement of the piston can be ensured at the same time.

Further, the mounting body further includes a mounting base, and at least a part of the valve seat is located in the mounting base. With such an arrangement, the mounting base can protect the valve body, avoiding damage to the valve body, and at the same time, the volume of the check valve can be reduced.

Further, the mounting base is provided with a second opening and a third opening; the third opening is in communication with the accommodating cavity, and the valve port is in communication with the second opening. With such an arrangement, when a fluid flows in a forward direction, the fluid enters the valve port through the second opening and drives the piston to move away from the valve port, the fluid flows into the accommodating cavity and flows to the third opening through the first opening. When the fluid flows in a reverse direction, the elastic member drives the piston to close the valve port, and the fluid cannot flow to the second opening.

Further, the mounting base is provided with a mounting opening, an end of the valve seat away from the valve port is a blocking member located in the mounting opening, and the blocking member 111 abuts against an end portion of the elastic member. With such an arrangement, the valve seat has a simple structure, facilitating the assembly of the valve seat.

Further, the check valve includes a retaining ring connected to the mounting base. The retaining ring is disposed at the mounting opening, and the retaining ring is in limiting fit with the valve seat, so as to restrict the valve seat from disengaging from the mounting base at the upper end of the mounting base. With such an arrangement, the valve seat has a simple structure, facilitating the assembly of the valve seat, and at the same time, the retaining ring has a simple structure, which can ensure the limiting effect on the valve seat and ensure a normal operation of the blocking member at the same time.

Further, a groove is annularly formed on an inner wall of the mounting opening, an outer peripheral edge of the retaining ring is disposed in the groove, and operating holes are provided at both ends of the retaining ring. The valve seat is provided with an auxiliary mounting groove, and the auxiliary mounting groove is provided correspondencing to the operating holes at both ends of the retaining ring. With such an arrangement, when a mounting tool is used to fix the retaining ring, the auxiliary mounting groove can avoid the mounting tool, facilitating a placement of the retaining ring into the groove, and at the same time, can avoid damage to the valve seat by the mounting tool, prolonging a service life of the valve seat.

Further, the blocking member is provided with a second guide hole, an end of the piston away from the valve port is movably disposed in the second guide hole, and the piston is in guiding fit with the second guide hole. With such an arrangement, an assembly of the piston and the blocking member is facilitated, and at the same time, since the piston is located in the second guide hole and the elastic member is located in the first guide hole, the volume of the check valve can be reduced, facilitating the use of the check valve.

Further, a first sealing member is disposed between the blocking member and the mounting base, and a second sealing member is disposed between the valve body and the mounting base. With such an arrangement, a sealing performance between the blocking member 111 and the mounting base and a sealing performance between the valve body and the mounting base can be ensured.

Further, the piston includes a piston head and a piston rod, the piston head is in sealing fit with the valve port, the valve cavity includes an accommodating cavity, and an end of the accommodating cavity away from the valve port is a second guide hole; the piston rod is movably disposed in the second guide hole, and is in guiding fit with the second guide hole. With such an arrangement, on a premise of ensuring a sealing fit between the piston head and the valve port, a weight of the piston can be reduced, the assembly of the piston is facilitated, and at the same time, a processing of the second guide hole on the piston is facilitated.

Further, a balance hole is provided on a circumferential wall of the first guide hole, and the balance hole is in communication with the first guide hole and the valve cavity located outside the first guide hole. With such an arrangement, the fluid can enter the second guide hole through the balance hole, and fluid in the second guide hole can also be discharged through the balance hole, so as to ensure the normal movement of the piston.

### Brief Description of the Drawings

The accompanying drawings, which constitute a part of the present disclosure, are used for providing a further understanding of the present disclosure; and illustrative embodiments of the present disclosure and descriptions thereof are intended to explain the present disclosure and are not construed to unduly limit the present disclosure. In the drawings:
Fig. 1 is a cross-sectional view of a check valve according to Embodiment 1 of the present disclosure;
Fig. 2 is a partially enlarged view of portion A in Fig. 1;
Fig. 3 is a schematic structural diagram of the check valve according to the present disclosure.

The reference numerals are included in the following drawings:
10, mounting body; 101, valve port; 11, valve seat; 111, blocking member; 1111, second guide hole; 11111, closed end; 1112, groove; 11121, first annular wall; 11122, second annular wall; 11123, bottom surface; 1113, mounting groove; 112, valve body; 1121, first opening; 1122, first valve body wall; 1123, second valve body wall; 113, accommodating cavity; 114, auxiliary mounting groove; 12, mounting base; 121, second opening; 122, third opening; 123, mounting opening; 1231, groove; 124, receiving cavity; 20, piston; 21, first guide hole; 22, balance hole; 23, piston head; 24, piston rod; 30, elastic member; 40, retaining ring; 41, operating hole.

### Detailed Description of the Embodiments

The technical solution in the embodiment of the present disclosure will be clearly and completely described below in conjunction with the accompanying drawings in the embodiment of the present disclosure. Obviously, the described embodiments are only a part of the embodiments of the present disclosure, but not all of the embodiments. The following description of at least one exemplary embodiment is merely illustrative in nature and is in no way intended to limit the disclosure and any application or use thereof. Based on the embodiments of the present disclosure, all other embodiments obtained by those of ordinary skill in the art without creative work shall fall within the scope of protection of the present disclosure.

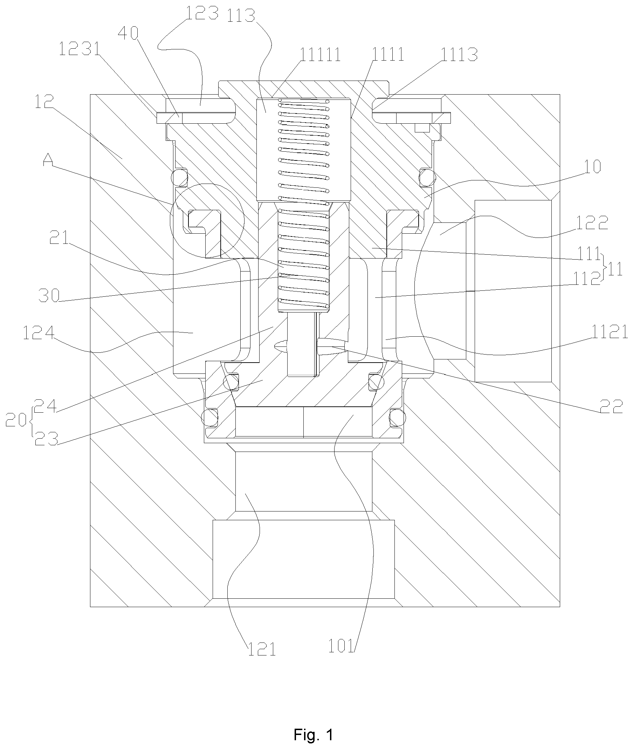

As shown in Figs. 1 to 3, Embodiment 1 of the present disclosure provides a check valve, the check valve including a mounting body 10, a piston 20, and an elastic member 30. The mounting body 10 has a valve cavity and a valve port 101. The piston 20 is movably disposed in the valve cavity, an outer side wall of the piston 20 is in guiding fit with an inner wall of the valve cavity, and the piston 20 is capable of closing or opening the valve port 101. The elastic member 30 is disposed between the piston 20 and the mounting body 10, and used for providing an elastic force for the piston 20 to move toward the valve port 101. An end of the piston 20 away from the valve port 101 is provided with a first guide hole 21, and an end of the elastic member 30 is located in the first guide hole 21 and abuts against an end portion of the first guide hole 21. An other end of the elastic member 30 abuts against the mounting body 10.

With the technical solution of the present disclosure, the piston 20 moves along the inner wall of the valve cavity, and the elastic member 30 can drive the piston 20 to move toward the valve port 101. Since the outer side wall of the piston 20 is in guiding fit with the inner wall of the valve cavity, deflection of the piston 20 during movement can be avoided, ensuring that the piston 20 in the check valve can move linearly during movement, so that the elastic member 30 can be compressed and restored linearly, avoiding deflection of the elastic member 30, enabling the elastic member 30 to be compressed and restored normally, and further ensuring that the piston 20 can maintain linear motion when the elastic member 30 drives the piston 20 to move; in addition, an end of the elastic member 30 is disposed in the first guide hole 21, so that the first guide hole 21 can limit a position of the elastic member 30, further reducing a possibility of deflection of the elastic member.

In some embodiments of the present disclosure, when a high-pressure fluid enters from the valve port 101, the fluid drives the piston 20 to move upward, the valve port 101 is opened, and the check valve is in a flow-through state. When the high-pressure fluid enters from other inlets of the mounting body 10, a driving force of the fluid together with the elastic force of the elastic member drives the piston 20 to move downward, the valve port 101 is closed, the fluid no longer flows, and the check valve is in a closed state.

Further, in some embodiments of the present disclosure, the mounting body 10 is provided with a fluid channel, and an axial direction of the fluid channel is perpendicular to a moving direction of the piston 20; the axial direction of the fluid channel may also be a same as the moving direction of the piston 20. When the valve port 101 is opened, the fluid channel is in communication with the valve port 101.

In an embodiment, an outer wall of the elastic member 30 is attached to an inner wall of the first guide hole 21. With such an arrangement, the position of the elastic member 30 is further limited, preventing bending deformation and deflection of the elastic member 30, thereby ensuring a normal movement of the piston 20.

Further, the valve cavity includes an accommodating cavity 113, and an end of the accommodating cavity 113 away from the valve port 101 is a second guide hole 1111. The piston 20 is in guiding fit with the second guide hole 1111; an end of the second guide hole 1111 is open, an other end is a closed end 11111, and an end portion of the elastic member 30 abuts against the closed end 11111. With such an arrangement, since the piston 20 is located in the second guide hole 1111 and the elastic member 30 is located in the first guide hole 21, a volume of the check valve can be reduced, facilitating an use of the check valve.

In an embodiment, the mounting body 10 includes a valve seat 11, the valve seat 11 includes a blocking member 111 and a valve body 112 that are connected to each other, an accommodating cavity 113 is formed between the blocking member 111 and the valve body 112, and the valve port 101 is provided at an end of the valve body 112 away from the blocking member 111. The blocking member 111 is provided with a second guide hole 1111, and an end of the piston 20 away from the valve port 101 is movably disposed in the second guide hole 1111. Optionally, the piston 20 is in guiding fit with the second guide hole 1111; or, at least a part of the piston 20 is located in the valve body 112, and the piston 20 is in guiding fit with the inner wall of the valve body 112. In the present disclosure, the piston 20 is in guiding fit with the second guide hole 1111, at least a part of the piston 20 is located in the valve body 112, and the piston 20 is in guiding fit with the inner wall of the valve body 112. The elastic member 30 is located between the piston 20 and the blocking member 111. With such an arrangement, an assembly of the piston 20, the elastic member 30, the blocking member 111 and the valve body 112 is facilitated, and at the same time, a processing of the blocking member 111 is facilitated. The piston 20 may also be in guiding fit with the inner wall of the valve body 112. The piston 20 may also be in guiding fit with the second guide hole 1111, and at the same time, the piston 20 is in guiding fit with the inner wall of the valve body 112.

The blocking member 111 is provided with a second guide hole 1111, and the piston 20 is in guiding fit with the second guide hole 1111; an end of the second guide hole 1111 is open, an other end is a closed end 11111, and an end portion of the elastic member 30 abuts against the closed end 11111. That is, an end of the elastic member 30 abuts against the first guide hole 21, and an other end of the elastic member 30 abuts against the closed end 11111. With such an arrangement, the elastic member 30 can be ensured to drive the piston 20 to move toward the valve port 101, and the position of the elastic member 30 is limited, ensuring a stability of movement of the piston 20.

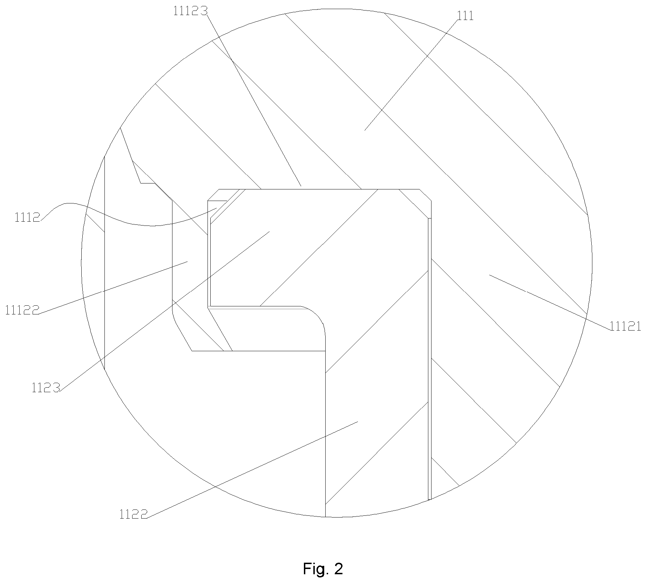

As shown in Fig. 2, the blocking member 111 is provided with a groove 1112, and an end of the valve body 112 away from the valve port 101 is sleeved outside the blocking member 111. A part of the valve body 112 is located in the groove 1112, and the valve body 112 is fixedly connected to a circumferential wall of the groove 1112. With such an arrangement, a connection stability between the blocking member 111 and the valve body 112 can be ensured, avoiding disconnection between the blocking member 111 and the valve body 112.

In an embodiment, the groove 1112 includes a first annular wall 11121, a second annular wall 11122, and a bottom surface 11123. An end of the valve body 112 away from the valve port 101 includes a first valve body wall 1122 and a second valve body wall 1123. The second valve body wall 1123 is provided at an end of the first valve body wall 1122 away from the valve port 101, and a width of the second valve body wall 1123 in a radial direction of the valve is greater than a width of the first valve body wall 1122 in the radial direction of the valve. The second valve body wall 1123 is attached to the bottom surface 11123, the first valve body wall 1122 is attached to the first annular wall 11121, and the second annular wall 11122 is riveted and fixed to the second valve body wall 1123. With such an arrangement, the groove 1112 can be closely attached to the first valve body wall 1122 and the second valve body wall 1123, reducing a volume occupied during a connection of the blocking member 111 and the valve body 112, and facilitating an assembly of the blocking member 111 and the valve body 112. At the same time, a processing of the groove 1112 and the valve body 112 is facilitated, and the groove 1112 and the valve body 112 have simple structures.

Further, in some embodiments, the mounting body 10 further includes a mounting base 12, and at least a part of the blocking member 111 and at least a part of the valve body 112 are both located in the mounting base 12. The mounting body 10 of the present embodiment includes a valve seat 11 and a mounting base 12 that are arranged separately. With such an arrangement, a processing of the mounting body 10 is facilitated.

In an embodiment, the mounting base 12 is provided with a mounting opening 123.

The mounting base 12 has a second opening 121 and a third opening 122; the third opening 122 is in communication with the accommodating cavity 113, and the valve port 101 is in communication with the second opening 121. In Embodiment 1, the mounting base 12 has a receiving cavity 124, and both the second opening 121 and the third opening 122 are in communication with the receiving cavity 124. The valve seat 11 is disposed in the receiving cavity 124.

The valve seat 11 is disposed in the receiving cavity 124 of the mounting base 12, the piston 20 is movably disposed in the accommodating cavity 113 of the valve seat 11, and the elastic member 30 can drive the piston 20 to move toward the valve port 101. When the fluid flows from the second opening 121 to the third opening 122, the fluid flows in a forward direction and can circulate; when the fluid flows from the third opening 122 to the second opening 121, the fluid flows in a reverse direction and cannot circulate. In some embodiments, when the fluid flows in the forward direction, the fluid enters the valve port 101 through the second opening 121 and drives the piston 20 to move in a direction away from the valve port 101, the fluid flows into the accommodating cavity 113 and flows to the third opening 122 through the first opening 1121. When the fluid flows in the reverse direction, the fluid force and the elastic member 30 drive the piston 20 to close the valve port 101, and the fluid cannot flow to the second opening 121. The outer side wall of the piston 20 is in guiding fit with an inner wall of the accommodating cavity 113.

In an embodiment, in the present disclosure, the third opening 122 is provided on a side wall of the mounting base 12, and the axial direction of the third opening 122 is perpendicular to the moving direction of the piston 20. A plurality of first openings 1121 are provided on a side wall of the valve seat 11. In the present embodiment, the second opening 121 and the third opening 122 can also be provided at both ends of the mounting base 12, respectively. However, the third opening 122 is preferably provided on the side wall of the mounting base 12, the fluid enters from a bottom of the mounting base 12 and is discharged from a side of the mounting base 12, reducing the flow path of the fluid, thereby improving a sensitivity of the check valve. In addition, the plurality of first openings 1121 can ensure a smooth flow of the fluid and avoid fluid blockage.

Further, the check valve further includes a retaining ring 40 connected to the mounting base 12, the retaining ring 40 is disposed at the mounting opening 123, and the retaining ring 40 abuts against an end of the valve seat 11 away from the valve port 101 to axially limit a position of the valve seat 11 and prevent the valve seat 11 from disengaging from the mounting base 12 from the upper end of the mounting base 12. With such an arrangement, the retaining ring 40 has a simple structure, facilitating an assembly of the retaining ring 40, and can ensure a limiting effect on the valve seat 11. In an embodiment, the retaining ring 40 is in limiting fit with the blocking member 111.

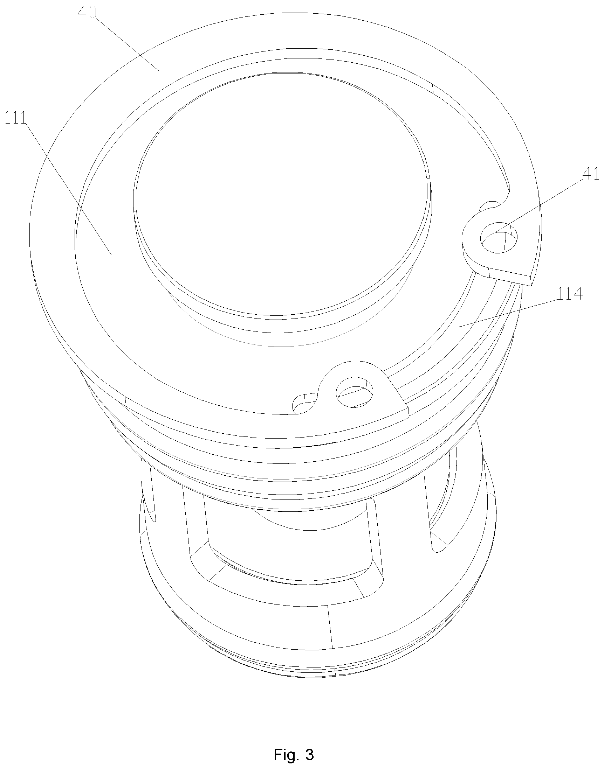

As shown in Fig. 3, a groove 1231 is annularly formed on an inner wall of the mounting opening 123, an outer peripheral edge of the retaining ring 40 is disposed in the groove 1231, operating holes 41 are provided at both ends of the retaining ring 40, an auxiliary mounting groove 114 is provided at an end of the valve seat 11 away from the valve port 101, and the auxiliary mounting groove 114 is provided corresponding to the operating holes 41 at both ends of the retaining ring 40. With such an arrangement, when a mounting tool is used to fix the retaining ring 40, the auxiliary mounting groove 114 can avoid the mounting tool, facilitating a placement of the retaining ring 40 into the groove 1231, and at the same time, can avoid damage to the valve seat 11 by the mounting tool, prolonging a service life of the valve seat 11.

The mounting tool can be a mounting clamp. The specific mounting process is as follows: two jaws of the mounting clamp pass through two operating holes 41 respectively and extend into the auxiliary mounting groove 114, the mounting clamp moves in the auxiliary mounting groove 114 to clamp the retaining ring 40, so that a circumference of the retaining ring 40 is reduced, and the mounting clamp can be removed after the retaining ring 40 is embedded in the groove 1231. In an embodiment, the auxiliary mounting groove 114 is arc-shaped; therefore, the auxiliary mounting groove 114 can guide a movement of the mounting clamp, improving a mounting efficiency.

In an embodiment, a first sealing member is disposed between the blocking member 111 and the mounting base 12; a second sealing member is disposed between the valve body 112 and the mounting base 12. With such an arrangement, a sealing performance between the blocking member 111 and the mounting base 12 and a sealing performance between the valve body 112 and the mounting base 12 can be ensured. Optionally, the first sealing member is an O-ring, and the second sealing member is an O-ring.

As shown in Fig. 1, the piston 20 includes a piston head 23 and a piston rod 24, and the piston head 23 is in sealing fit with the valve port 101. The valve cavity includes an accommodating cavity 113, and an end of the accommodating cavity 113 away from the valve port 101 is a second guide hole 1111; the piston rod 24 is movably disposed in the second guide hole 1111, and is in guiding fit with the second guide hole 1111. With such an arrangement, the piston rod 24 ensures a movement stability of the piston 20, and at the same time, facilitates a processing of the first guide hole 21 on the piston 20.

In an embodiment, a balance hole 22 is provided on a circumferential wall of the first guide hole 21, and the balance hole 22 is in communication with the first guide hole 21 and the valve cavity located outside the first guide hole 21. The first opening 1121 is provided on a side wall of the valve body 112, the balance hole 22 is provided on a side wall of the piston 20, an end of the balance hole 22 is in communication with the accommodating cavity 113, an other end of the balance hole 22 is located in the first guide hole 21, and the first guide hole 21 is in communication with the second guide hole 1111. With such an arrangement, the fluid can enter the second guide hole 1111 through the balance hole 22, and the fluid in the second guide hole 1111 can also be discharged through the balance hole 22, so as to ensure the normal movement of the piston 20.

Further, a protrusion is provided on a top of the blocking member 111, and a mounting groove 1113 is annularly formed on a side wall of the protrusion. A staff can disassemble and assemble the blocking member 111 by means of the mounting groove 1113. With such an arrangement, the disassembly and assembly of the blocking member 111 are facilitated.

In summary, in Embodiment 1 of the present disclosure, the mounting body 10 includes a valve seat 11 and a mounting base 12 that are arranged separately, and the valve seat 11 includes a blocking member 111 and a valve body 112 that are fixed by riveting.

Embodiment 2 of the present disclosure provides a check valve, which is different from Embodiment 1 in that the mounting body 10 includes a valve seat 11; the valve port 101 is located on the valve seat 11, the valve seat 11 has an accommodating cavity 113, an outer side wall of the piston 20 is in guiding fit with an inner wall of the accommodating cavity 113, and the elastic member 30 is disposed between the piston 20 and the valve seat 11. With such an arrangement, the mounting body 10 has a simple structure, facilitating an assembly of the valve seat 11 and the mounting base 12, and also facilitating a processing of the mounting base 12.

An end of the accommodating cavity 113 away from the valve port 101 is a second guide hole 1111; the piston 20 is in guiding fit with the second guide hole 1111; an end of the second guide hole 1111 is open, an other end is a closed end 11111, and an end portion of the elastic member 30 abuts against the closed end 11111. That is, an end of the elastic member 30 abuts against the first guide hole 21, and an other end of the elastic member 30 abuts against the closed end 11111. With such an arrangement, the elastic member 30 can be ensured to drive the piston 20 to move toward the valve port 101, and a stability of movement of the piston 20 can be ensured at the same time.

In an embodiment, the mounting body 10 further includes a mounting base 12, and at least a part of the valve seat 11 is located in the mounting base 12. With such an arrangement, the mounting base 12 can protect the valve body 112, avoiding damage to the valve body 112, and at the same time, a volume of the check valve can be reduced.

Further, in some embodiments, the mounting base 12 has a second opening 121 and a third opening 122; the third opening 122 is in communication with the accommodating cavity 113, and the valve port 101 is in communication with the second opening 121. In Embodiment 2, a flow mode of the fluid is the same as that in Embodiment 1, and is no longer repeated here.

Further, in some embodiments, the mounting base 12 is provided with a mounting opening 123, an end of the valve seat 11 away from the valve port 101 is a blocking member 111 located in the mounting opening 123, and the blocking member 111 abuts against an end portion of the elastic member 30. With such an arrangement, the valve seat 11 has a simple structure, facilitating an assembly of the valve seat 11, and at the same time, can prevent the elastic member 30 from disengaging from an interior of the valve seat 11, ensuring a normal operation of the check valve.

In an embodiment, a first sealing member and a second sealing ring are disposed between the valve seat 11 and the mounting base 12. With such an arrangement, fluid leakage during a flow process can be avoided.

In summary, in Embodiment 2 of the present disclosure, the mounting body 10 includes a mounting base 12 and a valve seat 11, and the valve seat 11 can be an integrated structure. The piston 20 is in guiding fit with the valve seat 11. The mounting base 12 is provided with a third opening 122, and an axis of the third opening 122 is perpendicular to a moving direction of the piston 20.

Embodiment 3 of the present disclosure provides a check valve, which is different from Embodiment 1 in that the check valve is not provided with a mounting base 12. The mounting body 10 includes a valve seat 11, the valve seat 11 includes a blocking member 111 and a valve body 112, and the blocking member 111 and the valve body 112 are arranged separately and connected to each other. The piston 20 is in guiding fit with the blocking member 111, or the piston 20 is in guiding fit with the valve body 112. An accommodating cavity 113 is formed between the blocking member 111 and the valve body 112. The valve body 112 or the blocking member 111 is provided with a first opening 1121 in communication with the accommodating cavity 113. The first opening 1121 may be located on a circumferential side wall of the valve body 112, may also be located on a circumferential side wall of the blocking member 111, and may also be located on a top of the blocking member 111.

It should be noted that the terminology used herein is for the purpose of describing particular embodiments only and is not intended to limit the exemplary embodiments of the present disclosure. As used herein, unless the context clearly dictates otherwise, the singular forms are intended to include the plural forms as well. It should also be understood that when the terms "comprise" and/or "include" are used in this specification, they specify the presence of stated features, steps, operations, devices, components, and/or combinations thereof.

Unless otherwise specifically stated, the relative arrangements of components and steps, numerical expressions, and numerical values set forth in these embodiments do not limit the scope of the present disclosure. Meanwhile, it should be understood that the dimensions of the various parts shown in the accompanying drawings are not drawn according to the actual proportional relationship for the convenience of description. Techniques, methods, and apparatuses known to those of ordinary skill in the related art may not be discussed in detail, but where appropriate, the techniques, methods and apparatuses shall be considered as part of the authorized description. In all examples illustrated and discussed herein, any specific values shall be construed as merely illustrative rather than restrictive. Accordingly, other examples of the exemplary embodiments may have different values. It should be noted that like items are denoted by like numerals and letters in the following drawings. Therefore, once a specific item is defined in one of the drawings, the item does not need to be further discussed in subsequent drawings.

In the description of the embodiments of the present disclosure, it should be understood that orientation or position relationships indicated by terms such as "front", "rear", "up", "down", "left", "right", "transverse", "vertical", "perpendicular", "horizontal", "top", and "bottom" are based on orientation or position relationships shown in the accompanying drawings and are merely for ease of description of the present disclosure and simplification of the description, rather than indicating or implying that the apparatuses or elements referred to must have a specific orientation or be constructed and operated in a specific orientation, and therefore cannot be construed as limiting the scope of protection of the present disclosure. Directional terms "inner" and "outer" refer to positions relative to the contour of each component itself.

For ease of description, spatially relative terms such as "above...", "over...", "on an upper surface of...", and "on" may be used herein to describe the spatial positional relationship between one device or feature and another device or feature as illustrated in the drawings. It should be understood that spatially relative terms are intended to encompass different orientations of the device in use or operation, in addition to the orientation depicted in the drawings. For example, if a device in the drawing is turned upside down, devices described as "above" or "over" other devices or structures would then be oriented "below" or "beneath" the other devices or structures. Thus, the exemplary term "above" may include both the orientations of "above" and "below". The device may also be positioned in other different manners (rotated by 90 degrees or at other orientations), and the spatially relative descriptions used herein shall be interpreted accordingly.

In addition, it should be noted that the use of terms such as "first" and "second" to define components is merely for the convenience of distinguishing the corresponding components; unless otherwise stated, the aforementioned terms have no special meanings and shall not be construed as limiting the scope of protection of the present disclosure.

The foregoing is merely a preferred embodiment of the present disclosure and is not intended to limit the present disclosure, which may be subject to various modifications and variations to those skilled in the art. Any modification, equivalent replacement, improvement, etc., made within the spirit and principles of the present disclosure should fall within the scope of protection of the present disclosure.

## Claims

1. A check valve, comprising:
a mounting body (10), the mounting body (10) having a valve cavity and a valve port (101);
a piston (20) movably disposed in the valve cavity, an outer side wall of the piston (20) being in guiding fit with an inner wall of the valve cavity, the piston (20) being capable of closing or
opening the valve port (101);
an elastic member (30) disposed between the piston (20) and the mounting body (10), the elastic member (30) being used for providing an elastic force for the piston (20) to move toward the valve port (101); and
wherein a first guide hole (21) is provided at an end of the piston (20) away from the valve port (101), an end of the elastic member (30) is located in the first guide hole (21), and an other end of the elastic member (30) abuts against the mounting body (10).

2. The check valve according to claim 1, wherein an outer wall of the elastic member (30) is attached to an inner wall of the first guide hole (21).

3. The check valve according to claim 1, wherein the valve cavity comprises an accommodating cavity (113), an end of the accommodating cavity (113) away from the valve port (101) being a second guide hole (1111); the piston (20) is in guiding fit with the second guide hole (1111); and an end of the second guide hole (1111) is open, an other end is a closed end (11111), and an end portion of the elastic member (30) abuts against the closed end (11111).

4. The check valve according to claim 1, wherein the mounting body (10) comprises a valve seat (11), the valve seat (11) comprises a blocking member (111) and a valve body (112) that are connected to each other, an accommodating cavity (113) is formed between the blocking member (111) and the valve body (112), and the valve port (101) is provided at an end of the valve body (112) away from the blocking member (111);
the blocking member (111) is provided with a second guide hole (1111), an end of the piston (20) away from the valve port (101) is movably disposed in the second guide hole (1111), and the piston (20) is in guiding fit with the second guide hole (1111); and/or, at least a part of the piston (20) is located in the valve body (112), and the piston (20) is in guiding fit with an inner wall of the valve body (112); and
the elastic member (30) is located between the piston (20) and the blocking member (111).

5. The check valve according to claim 4, wherein the blocking member (111) is provided with the second guide hole (1111), and the piston (20) is in guiding fit with the second guide hole (1111); an end of the second guide hole (1111) is open, an other end is a closed end (11111), and an end portion of the elastic member (30) abuts against the closed end (11111).

6. The check valve according to claim 4, wherein the blocking member (111) is provided with a groove (1112), an end of the valve body (112) away from the valve port (101) is sleeved outside the blocking member (111), and a part of the valve body (112) is located in the groove (1112), and the valve body (112) is fixedly connected to a circumferential wall of the groove (1112).

7. The check valve according to claim 6, wherein the groove (1112) comprises a first annular wall (11121), a second annular wall (11122) and a bottom surface (11123), the end of the valve body (112) away from the valve port (101) comprises a first valve body wall (1122) and a second valve body wall (1123), the second valve body wall (1123) is provided at an end of the first valve body wall (1122) away from the valve port (101), and a width of the second valve body wall (1123) in a radial direction of the valve is greater than a width of the first valve body wall (1122) in the radial direction of the valve; the second valve body wall (1123) is attached to the bottom surface (11123), the first valve body wall (1122) is attached to the first annular wall (11121), and the second annular wall (11122) is riveted and fixed to the second valve body wall (1123).

8. The check valve according to claim 4, wherein the mounting body (10) further comprises a mounting base (12), and at least a part of the blocking member (111) and at least a part of the valve body (112) are both located in the mounting base (12).

9. The check valve according to claim 1, wherein the mounting body (10) comprises a valve seat (11); and
the valve port (101) is located on the valve seat (11), the valve seat (11) has an accommodating cavity (113), the outer side wall of the piston (20) is in guiding fit with an inner wall of the accommodating cavity (113), and the elastic member (30) is disposed between the piston (20) and the valve seat (11).

10. The check valve according to claim 9, wherein an end of the accommodating cavity (113) away from the valve port (101) is a second guide hole (1111); the piston (20) is in guiding fit with the second guide hole (1111); an end of the second guide hole (1111) is open, an other end is a closed end (11111), and an end portion of the elastic member (30) abuts against the closed end (11111).

11. The check valve according to claim 9, wherein the mounting body (10) further comprises a mounting base (12), and at least a part of the valve seat (11) is located in the mounting base (12).

12. The check valve according to claim 8 or 11, wherein the mounting base (12) has a second opening (121) and a third opening (122); the third opening (122) is in communication with the accommodating cavity (113), and the valve port (101) is in communication with the second opening (121).

13. The check valve according to claim 11, wherein the mounting base (12) is provided with a mounting opening (123), an end of the valve seat (11) away from the valve port (101) is a blocking member (111) located in the mounting opening (123), and the blocking member (111) abuts against an end portion of the elastic member (30).

14. The check valve according to claim 13, wherein the check valve further comprises a retaining ring (40) connected to the mounting base (12), wherein the retaining ring (40) is disposed at the mounting opening (123), and the retaining ring (40) is in limiting fit with the valve seat (11), so as to restrict the valve seat (11) from disengaging from the mounting base (12) from an upper end of the mounting base (12).

15. The check valve according to claim 14, wherein a groove (1231) is annularly formed on an inner wall of the mounting opening (123), an outer peripheral edge of the retaining ring (40) is disposed in the groove (1231), operating holes (41) are provided at both ends of the retaining ring (40), and the valve seat (11) is provided with an auxiliary mounting groove (114), the auxiliary mounting groove (114) is provided corresponding to the operating holes (41) at both ends of the retaining ring (40).

16. The check valve according to claim 13, wherein the blocking member (111) is provided with a second guide hole (1111), an end of the piston (20) away from the valve port (101) is movably disposed in the second guide hole (1111), and the piston (20) is in guiding fit with the second guide hole (1111).

17. The check valve according to claim 8, wherein a first sealing member is disposed between the blocking member (111) and the mounting base (12), and a second sealing member is disposed between the valve body (112) and the mounting base (12).

18. The check valve according to claim 1, wherein the piston (20) comprises a piston head (23) and a piston rod (24), wherein the piston head (23) is in sealing fit with the valve port (101), the valve cavity comprises an accommodating cavity (113), and an end of the accommodating cavity (113) away from the valve port (101) is a second guide hole (1111); the piston rod (24) is movably disposed in the second guide hole (1111), and the piston rod is in guiding fit with the second guide hole (1111).

19. The check valve according to claim 1, wherein a balance hole (22) is provided on a circumferential wall of the first guide hole (21), and the balance hole (22) is in communication with the first guide hole (21) and the valve cavity located outside the first guide hole (21).
